# EUROPEAN PATENT APPLICATION

(11) **EP 2 546 323 A2**
(43) Date of publication of application: **16.01.2013**
(21) Application number: 12176295.9
(22) Date of filing: 13.07.2012
(51) Int. Cl.: C10L 5/44

(54) **Liquid fuel composition**

(30) Priority: 14.07.2011 US 201161507799 P; 25.05.2012 US 201213481500
(71) Applicant: Cool Planet Biofuels, Inc., Camarillo, CA 93012 (US)
(72) Inventor: Cheiky, Michael, Thousand Oaks, CA California CA 93012 (US); Traxler, Vern, Simi Valley, CA California CA93063 (US)
(74) Representative: Bates, Philip Ian

(57) **Abstract**

A liquid fuel composition comprising a fuel component derived from biomass conversion at increasing temperatures under pressure, the fuel component comprising one or more C₄⁺ compounds.

## Description

### FIELD OF THE INVENTION

This invention relates to a liquid fuel composition, comprising distilled biofuel components as one of the components in its formulation.

### BACKGROUND OF THE INVENTION

The biosphere is presently overburdened by carbon emissions produced from fossil fuels. The burning of fuels presently contributes to an annual release of 4 billion metric tons of carbon dioxide into the atmosphere and the injection of 2 billion metric tons of carbon dioxide into the world's oceans. It has been well documented that these carbon emissions negatively impact living organisms in the oceans as well as on land.

There is presently intense interest in producing liquid fuels derived from renewable resources. Fuels that are derived from biomass, also called biofuels, represent a particularly attractive replacement for fossil fuels. Biofuels can be derived from a wide variety of feedstocks. Biomass feedstocks are much less expensive than liquid fossil fuel feedstocks.

Approaches discussing liquid fuel compositions include US Patent Publication 2010/0218417, titled "Liquid Fuel Compositions" to Bauldreay et al., which teaches a liquid fuel composition comprising one or more C₄ compounds derived from biomass using a special process called aqueous phase reforming. In this process the biomass is first converted to sugars which are then subjected to hydrogenolysis and hydrogenation. The latter two processes produce C₂-C₆ oxygenates and sugar alcohols, which are typically subjected to Pt/Ru catalysts in order to form gasoline precursors. A method for producing a fuel composition is disclosed in US Patent 7,888,540 to Deluga et al. from a bio-oil feedstock utilizing a hydro-treatment process for the bio-oil. No specific details on the fuel composition were provided. International Patent Application WO 2009/004652 to Nair et al, titled "A Biofuel Composition, Process and Preparation and a Method of Fueling Thereof", discloses distilled cashew nut shell liquid as one of the components for biofuel as well as methods for production and formulation of said biofuel.

The above methods do not disclose a fuel composition containing a biomass fuel component obtained via a novel process that utilizes ramps of temperatures under pressure.

### BRIEF DESCRIPTION OF THE DRAWINGS

Fig. 1 is a flow diagram demonstrating basic steps in the production of components of the liquid fuel composition of the present invention.

Fig. 2 is a flow diagram of the basic stages of the processes in a biomass fractioning system as they progress in time.

Fig. 3 is an embodiment of applied pressure and biomass response in a biofractionator.

Fig. 4 is a distillation curve showing the % recovered biofuel material as a function of distillation vapor temperature.

Figs. 5a-5c show gas chromatograms (GC) of biofuel prior to distillation with no dehydration step(5a), a biofuel fraction collected in the temperature range 73°C-105°C during the biofuel distillation between 0°C and 188°C, no dehydration step (5b), and biofuel component containing all combined collected fractions, no dehydration step (5c).

Figs. 6a-6c show gas chromatograms (GC) of biofuel prior to distillation with no dehydration step (6a), a biofuel fraction collected in the temperature range 73°C105°C during the biofuel distillation between 0°C and 188°C, with dehydration step (6b), and biofuel component containing all combined collected fractions, with dehydration step (6c).

Fig. 7 depicts a comparison gas chromatogram of the fuel components of the present invention versus 89 octane commercially available gasoline.

Fig. 8 summarizes the distillation properties of fuel components of the present invention and the distillation properties of combustible fuels containing these fuel components.

### DETAILED DESCRIPTION OF INVENTION

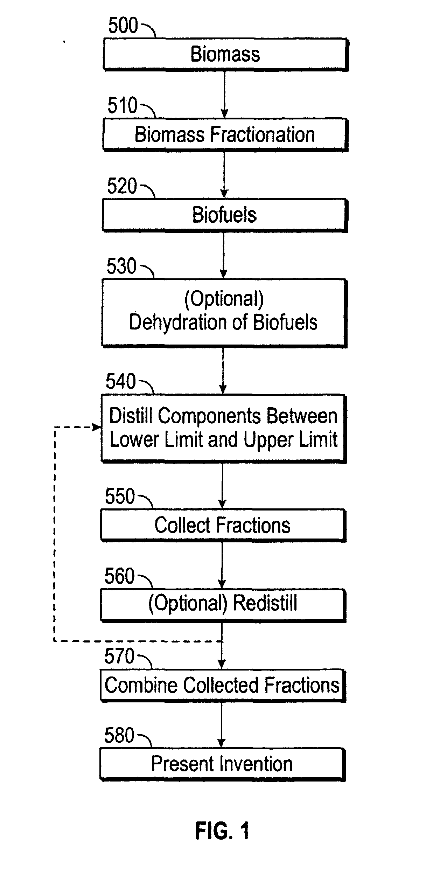

A flow diagram for the basic steps of the present invention is shown in Fig. 1. Referring to the figure, a biomass feedstock 500 is processed in biomass biofractioning process 510 (described below) to produce biofuels 520 which are optionally dehydrated in process 530. The biofuels are subject to a selective distillation process 540 that selects components whose final boiling points are between previously selected lower and upper limits. Distillation fractions are collected in process 550 and optionally redistilled in step 560. The collected fractions are combined in step 570 to yield the product of the present invention 580.

As used herein, the term 'biomass' includes any material derived or readily obtained from plant sources. Such material can include without limitation: (i) plant products such as bark, leaves, tree branches, tree stumps, hardwood chips, softwood chips, grape pumice, sugarcane bagasse, switchgrass; and (ii) pellet material such as grass, wood and hay pellets, and (iii) crop products such as corn, wheat and kenaf. This term may also include seeds such as vegetable seeds, fruit seeds, and legume seeds.

The term 'biomass' can also include: (i) waste products including animal manure such as poultry derived waste; (ii) commercial or recycled material including plastic, paper, paper pulp, cardboard, sawdust, timber residue, wood shavings and cloth; (iii) municipal waste including sewage waste; (iv) agricultural waste such as coconut shells, pecan shells, almond shells, coffee grounds; and (v) agricultural feed products such as rice straw, wheat straw, rice hulls, corn stover, corn straw, and corn cobs.

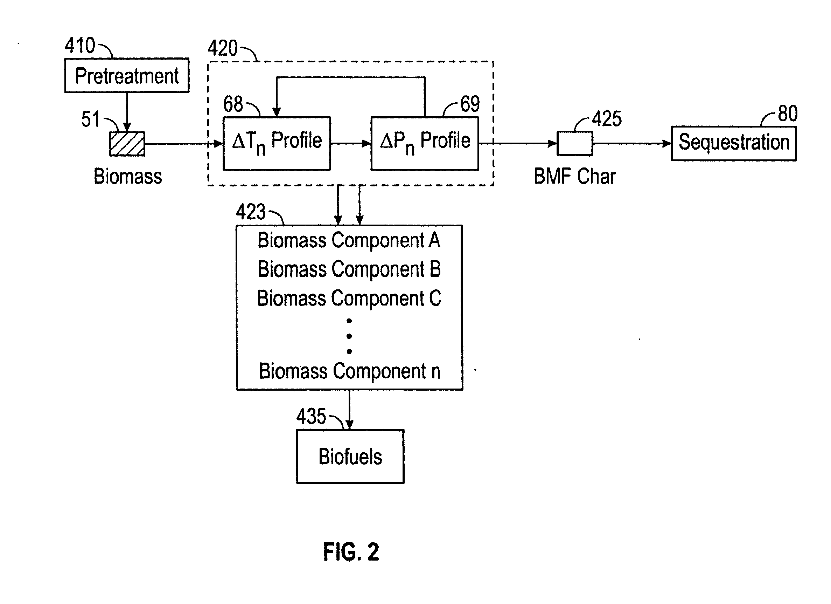

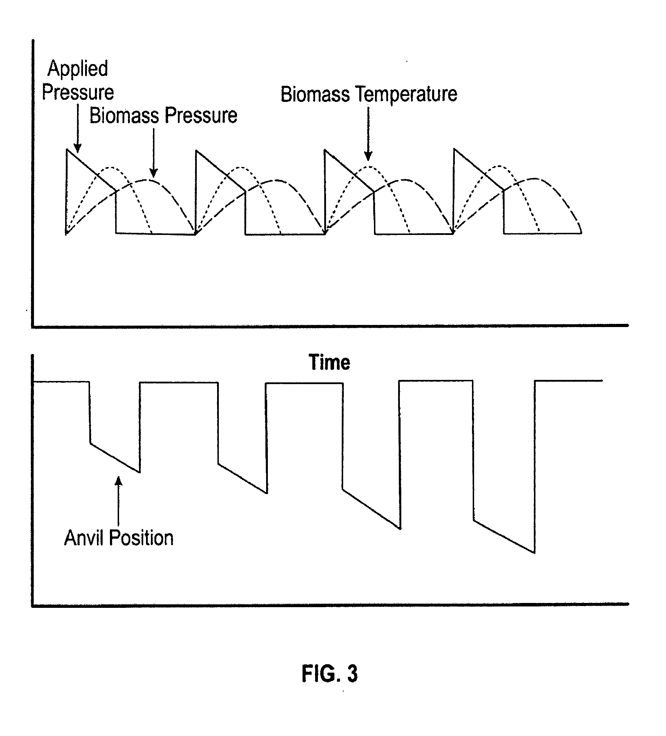

An embodiment featuring a biofractioning process is shown in Figs. 2 and 3. This process subjects the biomass to decomposition using temperature ramps under pressure. This process has been described in detail in co-owned Patent Application No. 13/103,905 entitled "Method for Biomass Fractioning by Enhancing Thermal Conductivity" and embodied in a system described in co-owned Patent Applications 13/019,236 entitled "System and Method for Biomass Fractioning". Biomass 51 is pretreated in operation 410 prior to being subjected to the bio-fractioning process 420. The conversion process produces sequesterable carbon 425 (sometimes referred as BMF char) and volatile gas streams 423, which are subsequently converted to biofuels 435.

### BIOMASS PRETREATMENT

Referring now to Fig. 2, operation 410 involves pretreatment of the biomass prior to being subjected to bio-fractioning process 420. The purpose of the pretreatment is to facilitate the subsequent bio-fractioning process. The bio-fractioning process involves a stepwise decomposition of biomass at increasing temperatures under pressure. This process is facilitated if the biomass is ground and dispensed onto a chamber as a thin sheet. The biomass may be ground by a variety of equipment including, but not limited to, equipment for making mulch, chips, pellets, or sawdust. Ground particle size may range from 0.001 inch to 1 inch in diameter, limited by processing equipment size and thermal transfer rates.

Embodiments feature dispensation onto a biomass chamber that is much wider and longer than it is thick. In some cases, biomass is dispensed into thin sheets whose total thickness is 1 to 30 times the biomass particle size. A preferred thickness for the chamber for uncompressed biomass (which is ground or chopped to 1/8" or smaller) is approximately 3/4" in thickness. As the biomass is heated and further pulverized (as discussed below), the emerging BMF char quickly condenses to a layer about 1/10" thick. This aspect ratio ensures mild pyrolyzing conditions that allow the collection of useful chemical compounds known as bio-intermediary compounds as well as the production of BMF char. A person of skill in the art will appreciate that these biomass chambers can be sized in width and length along with the diameter of their corresponding drive disc to any such size as appropriate for the desired throughput for the biomass fractionator, without departing from the scope if the invention.

Dispensation as thin sheets assures an environment similar to laboratory scale mild pyrolysis conditions. In practice, the environment is scalable in that it can be expanded in two dimensions to any practical working throughput while retaining a constant thickness for heat treatment of incoming materials. The biomass may be dispensed in pre-dried form, or it may be dried after dispensation. Biomass may be loaded piecemeal onto a plurality of movable biomass reaction chambers which are movable using conventional drive mechanisms such as gear drives, chain drives, ratcheting sprockets, etc. In addition to linear displacements, the reaction chambers may also be arranged on a disc that rotates continuously or in a stepwise fashion.

### BIOMASS FRACTIONING

The dispensed biomass is subjected to a novel biofractioning process 420 described in detail in co-owned Patent Application No. 13/103,905 entitled "Method for Biomass Fractioning by Enhancing Thermal Conductivity" and co-owned Patent Application No. 13/019,236 entitled "System and Method for Biomass Fractioning". This process subjects the biomass to decomposition that produces volatile gas streams 423 using discrete temperature increments under pressure. The pressure serves to increase the thermal conductivity of partially carbonized biomass and accelerates the decomposition.

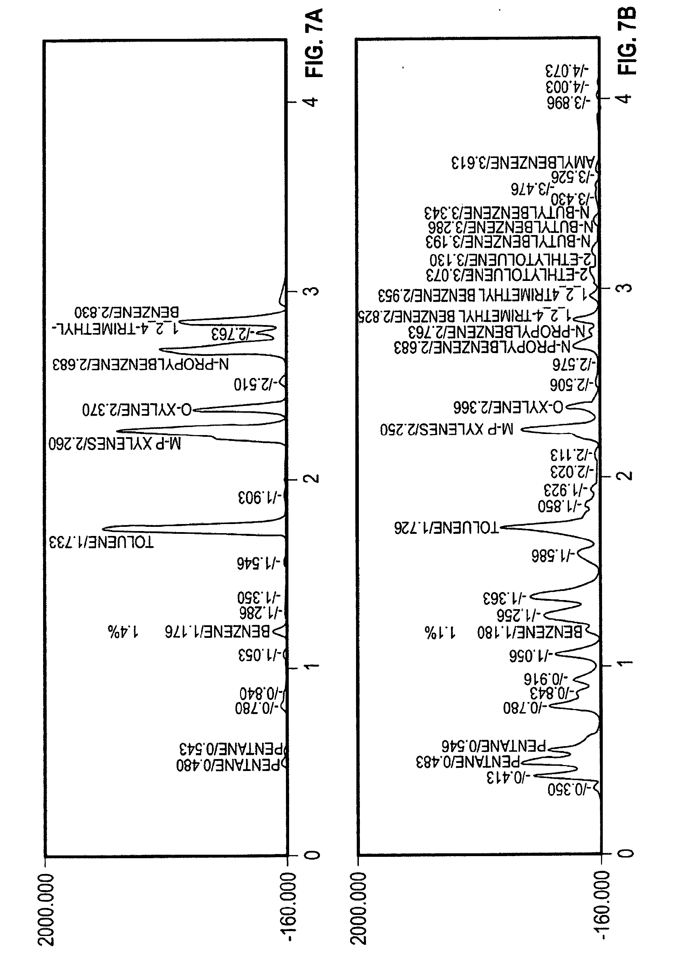

Fig. 2 is a flow diagram depicting an embodiment of the time sequence of the processes involved in the biomass fractionation. Biomass is pretreated in process 410 and then subjected to a series of temperature ramp profiles (ΔTₙ) and pressure shock profiles (ΔPₙ), where n is an integer greater than 1 that describes the stages in the stepwise decomposition of the biomass. In particular, the biomass is subjected first to a heating profile ΔT1, typically a linear temperature ramp, by a heating agent such as a metal anvil at processing station 68. Typically, the purpose of this first ΔT1 profile is to dewater the biomass, producing processing water 421. Subsequent ΔTₙ profiles end at progressively higher temperatures and serve the purpose of outgassing and of thermochemically converting solid biomass to volatile bio-compounds. These useful biocompounds emerge at progressively higher devolatilization temperatures. In order to accomplish this devolatilization in a selective manner, the temperature treatment is accompanied by a pressure treatment. In the embodiment of Fig. 7, this is achieved using compacting station 69 (e.g., a series of anvils) for subjecting the biomass to accompanying pressure profiles ΔPₙ comprising a sequence of pressure shocks that exploit the inherent compressional features of carbon.

In some embodiments, the temperature profiles are linear ramps ranging from 0.001°C/sec to 1000°C/sec, and from 1°C/sec to 100°C/sec. Processing heating station 68 may be heated by electrical heating elements, direct flame combustion, or by directed jets of heated working gas or supercritical fluid. For a given n, the heating profile and the pressure compaction profile may be linked via a feedback loop, or may be applied by the same agent simultaneously. Compacting station 69 may be controlled by electrically driven devices, air compressed devices, or any other form of energy that serves to impact load the biomass. A given volatile component or set of volatile components 423 of the decomposed biomass are collected after each application of a temperature ramp and pressure profile. BMF char 425 remains after these processing steps. BMF char is then ready for sequestration process 80.

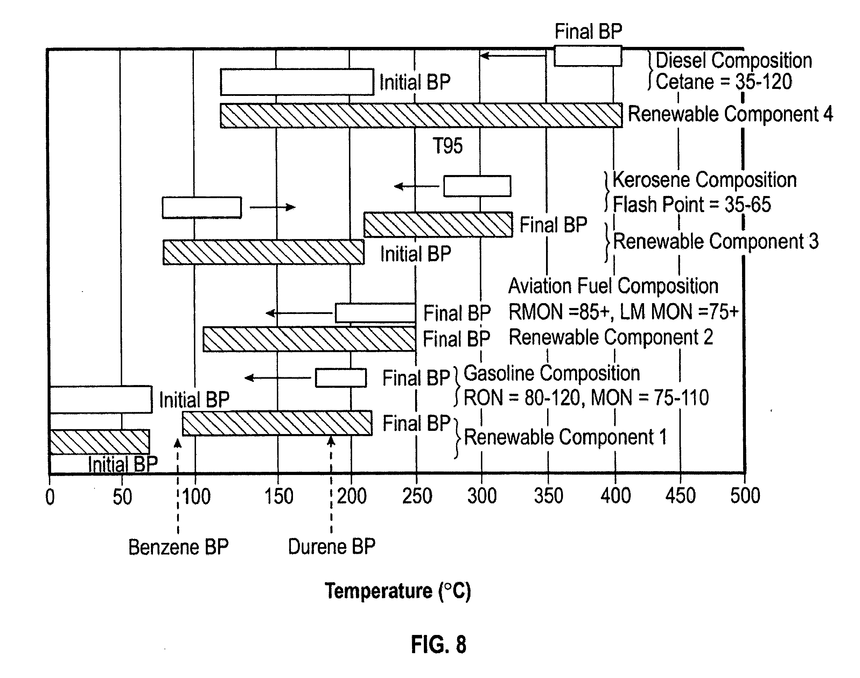

The selective pyrolysis of the biomass arises out of the interplay between the applied pressure pulses, applied temperature and resultant pressures and temperatures experienced by the biomass. The process is illustrated diagrammatically in Fig. 8, which shows applied pressure, biomass temperature, biomass pressure and anvil position as a function of time. It is understood that a wide variety of different types of pressure pulses may be applied, and that the entire illustration is an expository device. In Fig. 3, pressure shocks applied via compacting station 69 (in Fig. 2) are shown as a series of triangular pressure pulses with an unspecified rest time. The process starts out by utilizing the thermal conductivity of water. The biomass is first subjected to a temperature ramp sufficient to cause the biomass to release water. The released heated water vapor is then subjected to a pressure shock, which compresses the steam, thus accelerating the biomass decomposition. It may be possible for the steam to attain supercritical state, but that is not a requirement for the present invention.

With continued reference to Fig. 3, the pressure shock also aids in collapsing the biomass. A short time after peak pressure is applied, the anvil is pushed back by the pressure of extracted volatile compounds. When the volatile compounds are removed along with the steam, pressure within the biomass is decreased suddenly. Biomass temperature rapidly returns to base levels, and the anvil returns to its unextended base position. After the water has been removed entirely from the biomass, the applied temperature causes hot localized areas within the biomass that initiate carbon formation. Compressive impacts on the newly formed carbon serve in turn to increase the thermal conductivity of the carbon. The increased thermal conductivity serves to efficiently transmit heat energy needed to break down the biomass to the next stage in its decomposition. Furthermore, because carbon exhibits compressional memory, compressive impacts are sufficient to exert this effect on thermal conductivity.

The compressional memory of carbon has been indirectly demonstrated in studies of commercial carbon resistors as low pressure gauges. *See* Rosenberg, Z. et al International Journal of Impact Engineering 34 (2007) 732-742. In these studies, metal discs were launched from a gas gun at high velocity and impacted an epoxy or Plexiglas target in which a carbon resistor was embedded. Resistance changes were measured as a function of time after impact. It was noted that the resistance decreased rather rapidly in less than a microsecond, and stayed low for several microseconds, in some cases over 10 microseconds, until it began to increase gradually to pre-impact levels. There is essentially a memory effect or a slow relaxation after the impact. As electrical resistance and thermal conductivity are inversely correlated for carbon as for metals (See, *for example,* Buerschaper, R.A. in Journal ofApplied Physics 15 (1944) 452-454 *and* Encyclopedia of Chemical Technology, 5th editi*on),* these studies reveal a compression memory on the part of the carbon. This compression memory is at least partly utilized in embodiments of the invention.

Embodiments of the invention also utilize the increase in thermal conductivity as carbon is compressed. The change in electrical resistance with pressure in carbon microphones is a well-known effect utilized by carbon telephones and carbon amplifiers. U.S. Patent No. 203,216, U.S. Patent No. 2,222,390 and U.S. Patent No. 474,230 to Thomas Edison, describe apparatus that transform sound compressions (vibrations) to changes in electrical resistance of carbon granules. Carbon is even more sensitive than most metals in its inverse relationship between electrical resistance and thermal conductivity.

Below are data indicating the thermal conductivity of various substances (CRC Handbook of Chemistry and Physics, 87th edition) in comparison to the measured thermal conductivity of BMF char:

**Table 1. Select Thermal Conductivities in W/(m•K)**

| | |
|---|---|
| Copper | 390 |
| Stainless Steel | 20 |
| Water | 0.6 |
| Dry Wood | 0.3 |
| Fuels | 0.1 to 0.2 |
| Carrier Gases (He, N₂, etc.) | 0.01 to 0.02 |
| Carbon Char | 0.01 to 0.05 |
| BMF | char 1 to 5 |

As the thermal conductivity of the formed carbon within the biomass increases due to pressure shocks, it becomes consequently easier to attain mild pyrolysis conditions within the biomass. As higher temperatures are reached, the fact that carbon is a better heat transfer agent than water enables higher boiling compounds to become volatile. Pressure shocks serve to compress these higher boiling compounds and contribute to fracturing cell walls within the biomass. The process is illustrated by FIG. 7, which shows anvil extension at peak pressure getting longer with subsequent pulse application, thus indicating successive biomass pulverization in conjunction with release of useful higher boiling compounds.

A variety of pressure profiles ΔPₙ are effective in increasing the carbon thermal conductivity. The magnitude of the pressure can vary from 0.2 MPa to 10 GPa and may be applied via a number of different technologies, including air driven pistons, hydraulically driven pistons, and explosive driven devices. The duration of the pressure application can vary from 1 microsecond to 1 week. It is understood that pressure pulses of different magnitudes and different time durations may be admixed to yield optimum results.

The efficient heat energy transfer executed by embodiments of the present invention can be enhanced by the addition of supercritical fluids in the reaction chamber. It is known that supercritical fluids can improve heat transfer as well as accelerate reaction rates. Certain embodiments can operate with supercritical carbon dioxide, supercritical water, supercritical methane, supercritical methanol, or mixtures of the above. It is possible that supercritical conditions are created internally with some pressure and temperature profiles.

A system capable of embodying the methods of the present invention is described in co-owned, co-pending U.S. Patent Application No. 2010/0180805 entitled "System and Method for Biomass Fractioning," the content of which is incorporated herein by reference in its entirety. This system comprises a biomass load and dump station, a heated pulverizing processing station for compressing the biomass, a biochar dumping station for removing residual biochar, and a plurality of biomass reaction compartments able to carry the biomass from station to station.

### FUEL CONVERSION

The volatile gas streams are transformed to fuel compounds via a catalyst conversion process. These fuel compounds are typically termed renewable fuels and can be components in any combustible fuel, such as gasoline, diesel, aviation fuel and other fuel blend stocks such as BTX, derived from biomass and useful for transportation or other purposes. Numerous catalyst systems may be selected to effect this conversion depending on the nature of the volatile gas streams and desired fuel component properties. The catalysts that can be used in the conversion include aromatization catalysts, gas-upgrading catalysts and dehydration catalysts. The aromatization catalysts can be comprised of MFI type zeolites and metal modified MFI type zeolites, where the metal is selected from the group consisting of: Group VIB metals, Group VIIB metals, Group VIII metals, Group IB metals, Group IIB metals, Ga, In, and all combinations thereof. The gas-upgrading catalyst can be comprised of metal modified MFI type zeolites, where the metal is selected from the group consisting of: Ga, Zn, In, Mo, W, Cr, Pt, Pd, Rh, Ru, Au, Ir, and combinations thereof. The dehydration catalyst can be any acid catalyst, such as heterogeneous solid acid catalysts.

Volatile components can be recirculated to at least one of the following: a) one or more processing stations b) the dehydration catalyst, c) the aromatization catalyst, and d) the gas-upgrading catalyst in order to create fuels.

### DISTILLATION AND COMPONENT SELECTION

In one embodiment, a first fuel component can comprise one or more C₄+ compounds derived from biomass conversion using ramps of temperature under pressure, wherein the fuel component has a component initial boiling point of in the range of 0°C and 70°C and a component final boiling point in the range of 85°C and 225°C, a component density at 20°C in the range of 600 to 990 kg/m³, a component sulfur content of at most 10 mg/kg, a component RON in the range of 80 to 120 and a component MON in the range of 75 to 110. The C₄+ compounds can comprise compounds primarily with 4 to 16 carbon atoms.

In some cases, the gasoline composition contains a first fuel component, comprising one or more C₄+ compounds derived from biomass conversion using ramps of temperature under pressure, wherein the fuel component has a component initial boiling point of in the range of 0°C and 70°C and a component final boiling point in the range of 85°C and 225°C, a component density at 20°C in the range of 600 to 990 kg/m³, a component sulfur content of at most 10 mg/kg, a component RON in the range of 80 to 120 and a component MON in the range of 75 to 110. The gasoline composition has an initial boiling point in the range of 0°C and 70°C, a final boiling point at most 225°C, a RON number in the range of 80 to 120 and a MON number in the range of 75 to 110. The amount of first fuel component in a gasoline composition is at least 0.1 % volume, based on total volume of gasoline.

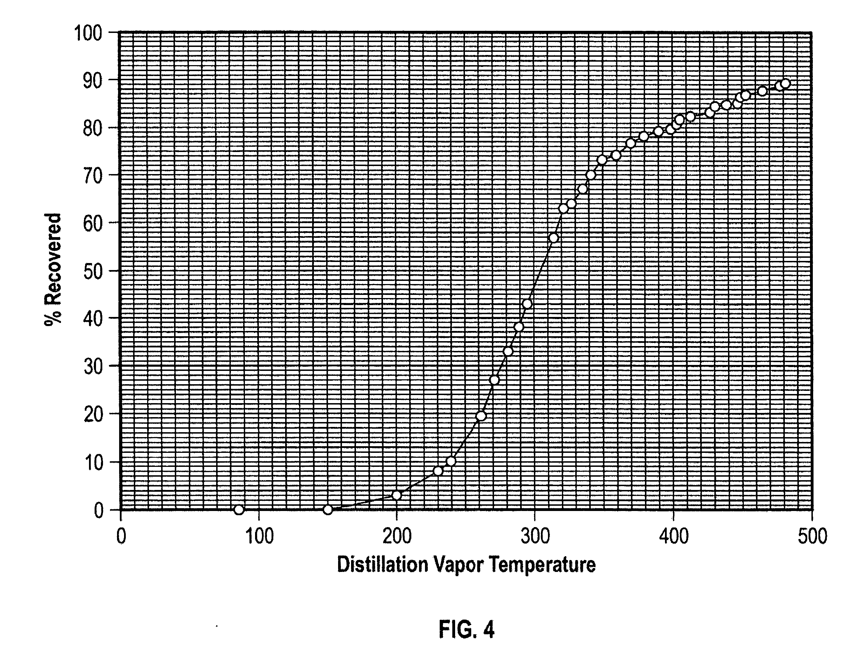

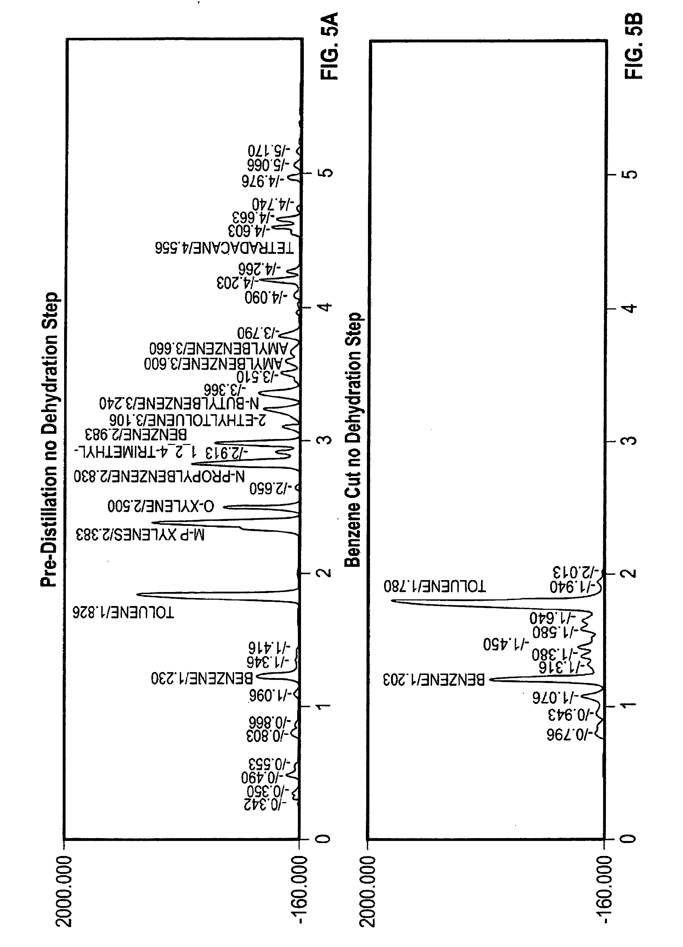

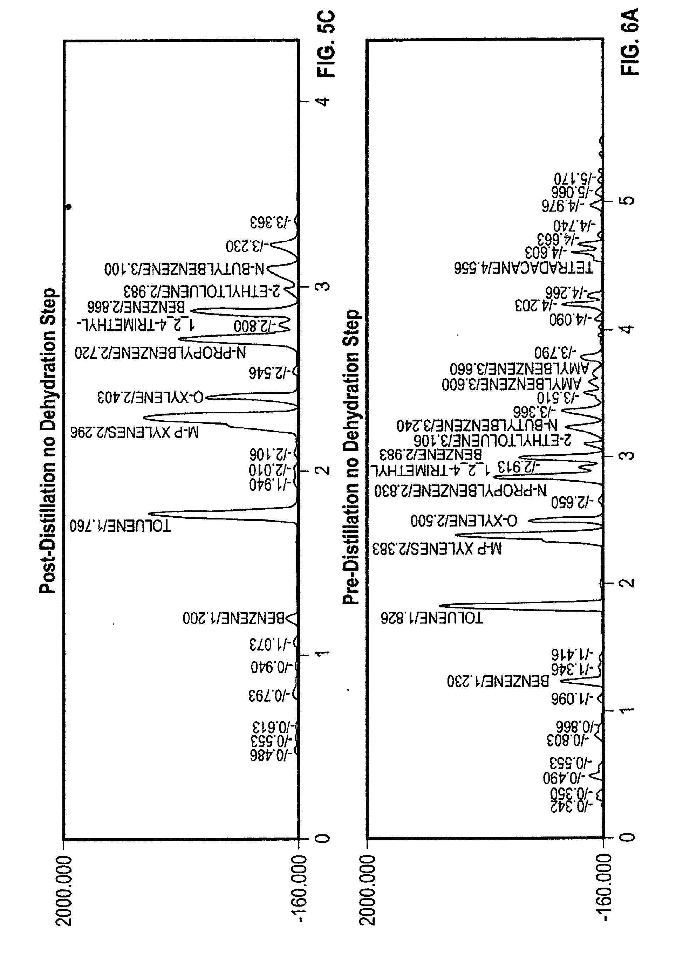

Fig. 4 shows a distillation curve (ASTM D371 0) obtained from fuel converted from corn cobs. The biomass conversion was performed at 370°C using a dehydration catalyst containing silica and alumina and an aromatization catalyst comprising ZSM-5. Detectable amounts of material starts distilling above 150°F, with most material distilling between 200°F and 340°F. 90% recovery is achieved by a temperature of 480°F. No dehydration was performed for these samples. Fig. 5a shows a gas chromatogram (GC) of material collected prior to distillation, comprised of 3.9% benzene, 16.2% toluene, 24.0 % xylene, and 55.9% higher substituted benzenes and hydrocarbons, as determined from compound integral area curves. Combining fractions collected before 163F and the fraction distilling between 189°F and 370°F yields GC results shown in Fig. 5c. The fraction collected between 163°F to 189°F is shown in Fig. 5b. Material shown in Fig. 5c consists of 1.4% benzene, 18.4% toluene, 34.7% xylene, and 45.5% higher substituted benzenes. Material shown in Fig. 5b comprises approximately 3% of the total shown in Fig. 5c, and consists of 18% benzene and 46.5% toluene and 35.5% of other components.

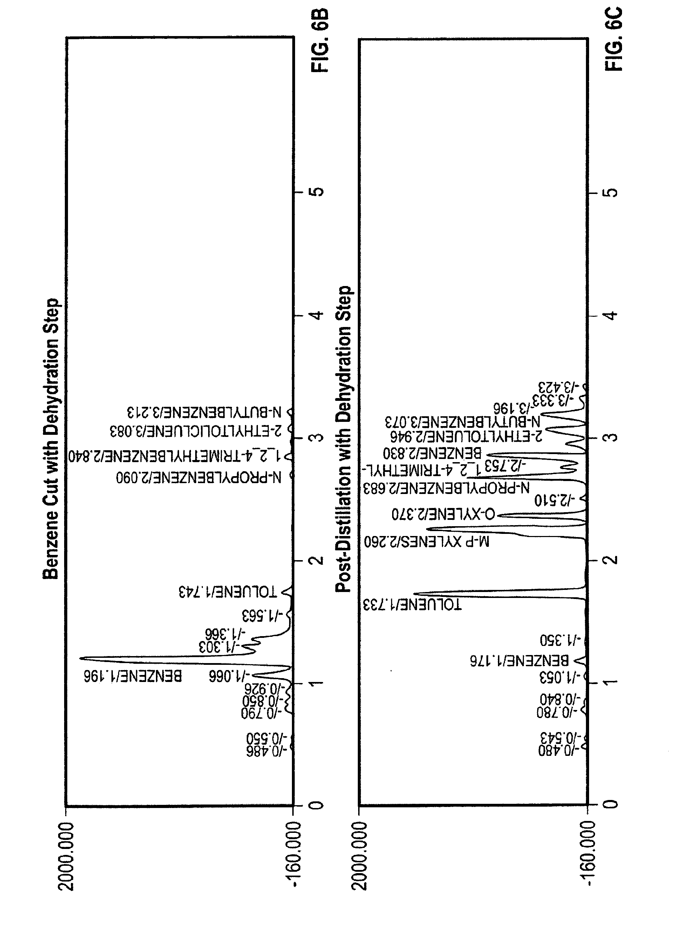

Dehydration of the biofuels can be performed with a drying agent such as magnesium oxide or molecular sieves. This prevents azeotropic distillation and is expected to change the composition of the distillate. When the pre-distillation material is subjected to dehydration with 3A zeolite, Fig. 6b shows results of distillate collected between 163°F and 189°F. The distillate comprises 2.9% of the total and contains 53% benzene and 1.8% toluene, significantly more benzene and significantly less toluene than the distillate that was not subjected to dehydration. Combining a dehydrated distillate collected between 50°F and 163°F and a dehydrated distillate collected between 189°F and 370°F showed a composition of 1.4% benzene, 20.1 % toluene, 30.8% xylene and 47.7% higher substituted aromatics and hydrocarbons, as determined from integral area curves. Fig. 7 shows a comparison of the fuel component of the present invention versus commercially available 89 octane gasoline. Similar benzene content as well as similar absence of high molecular weight compounds is noted in both samples.

According to some embodiments of the invention, the aviation fuel composition contains a second fuel component, comprising one or more C4+ compounds derived from biomass conversion using ramps of temperature under pressure, wherein the fuel component has a component final boiling point in the range of 110°C and 250°C, a component density at 20°C in the range of 600 to 990 kg/m³, a component sulfur content of at most 10 mg/kg, a component RON in the range of 80 to 120 and a component MON in the range of 75 to 110. The C₄+ compounds can comprise compounds primarily with 4 to 16 carbon atoms. The aviation fuel composition of the present invention has a final boiling point of at most 250°C, a Lean Mixture MON number of 75 or more, and a Rich Mixture Octane number of 85 or more. In some cases, the amount of second fuel component in an aviation fuel composition is at least 0.1 % volume by total volume of aviation fuel.

According to further embodiments, a third fuel component of present invention can comprise one or more C₄+ compounds derived from biomass conversion 4using ramps of temperature under pressure, wherein the third fuel component has a T95 (temperature at which 95% volume has evaporated) in the range of 220°C to 400°C, a density at 20°C is between 600 to 990 kg/m³ and a sulfur content is at most 10 mg/kg. In some cases, a diesel composition may include a third fuel component that comprises one or more C₄+ compounds derived from biomass conversion using ramps of temperature under pressure, wherein the third fuel component has a T95 in the range of 130°C to 400°C, a density at 20°C is between 600 to 990 kg/m³ and a sulfur content is at most 10 mg/kg. The C₄+ compounds can comprise compounds primarily with 4 to 16 carbon atoms. The diesel composition has an initial boiling point in the range of 130°C to 230°C, a final boiling point of at most 420°C, and a cetane number in the range of 35 to 120. The amount of third fuel component in a diesel composition can be at least 0.1 % volume by total volume of diesel.

In some embodiments of the invention, a fourth fuel component can comprise one or more C compounds derived from biomass conversion using ramps of 4+temperature under pressure, wherein the fourth fuel component has an initial boiling point in the range of 120°C to 220°C, a final boiling point in the range of 220°C to 320°C, and a sulfur content of at most 10 mg/kg. In one implementation, a kerosene composition contains a fourth fuel component, comprising one or more C₄+ compounds derived from biomass conversion using ramps of temperature under pressure, wherein the fourth fuel component has an initial boiling point in the range of 80°C to 220°C, a final boiling point in the range of 220°C to 320°C, and a sulfur content of at most 10 mg/kg. The C₄+ compounds can comprise compounds primarily with 4 to 16 carbon atoms. The kerosene composition may have an initial boiling point of at least 80°C, a final boiling point of at most 320°C, and a flash point is in the range of 35°C to 65°C. The amount of fourth fuel component in kerosene composition is at least 0.1 % volume by total volume kerosene. Fig. 8 summarizes the distillation properties of fuel components according to an embodiment of the present invention and the properties of a gasoline composition, aviation fuel composition, kerosene composition and diesel fuel composition containing a fuel component. Fuel components can be combined to compositions with a wide range of distillation properties.

### SEPARATION AND BLENDING

According to an embodiment of the invention, the fuel components can be optionally blended in a gasoline formulation, diesel formulation, aviation fuel formulation, and kerosene formulation. It may also be co-blended with methanol, ethanol, propanol, butanol, butanediol, isobutanol, and vegetable oil. It may also be co-blended with any products from a fluidized catalytic cracking process, such as light naphtha, heavy naphtha, light cycle oil, heavy cycle oil, and kerosene. In some embodiments, additives may be added to the fuel or fuel blends. Additives such as detergents, combustion improvers, cetane improvers, emulsifiers, antioxidants, antifoam agents, corrosion inhibitors, wax crystal modifiers, distillate flow improvers, lubricity agents, icing inhibitors and antistatic agents may be added.

The steps set forth hereinabove with respect to Figure 1 can be performed in batch fashion or in a continuous manner. In particular, the implementation of a continuous process may be accomplished by means known to those skilled in the art, including the use of appropriate separation unit(s) which sequentially separate components above a specified lower limit or separate components below a specified upper limit. By way of example, the selective distillation process 540 might comprise a sequence to remove benzene and durene.

Although the invention is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations, to one or more of the other embodiments of the invention, whether or not such embodiments are described and whether or not such features are presented as being a part of a described embodiment. Thus, the breadth and scope of the present invention should not be limited by any of the above-described exemplary embodiments.

Terms and phrases used in this document, and variations thereof, unless otherwise expressly stated, should be construed as open ended as opposed to limiting. As examples of the foregoing: the term "including" should be read as meaning "including, without limitation" or the like; the term "example" is used to provide exemplary instances of the item in discussion, not an exhaustive or limiting list thereof; the terms "a" or "an" should be read as meaning "at least one," "one or more" or the like; and adjectives such as "conventional," "traditional," "normal," "standard," "known" and terms of similar meaning should not be construed as limiting the item described to a given time period or to an item available as of a given time, but instead should be read to encompass conventional, traditional, normal, or standard technologies that may be available or known now or at any time in the future. Likewise, where this document refers to technologies that would be apparent or known to one of ordinary skill in the art, such technologies encompass those apparent or known to the skilled artisan now or at any time in the future.

The presence of broadening words and phrases such as "one or more," "at least," "but not limited to" or other like phrases in some instances shall not be read to mean that the narrower case is intended or required in instances where such broadening phrases may be absent. Additionally, the various embodiments set forth herein are described in terms of exemplary block diagrams, flow charts and other illustrations. As will become apparent to one of ordinary skill in the art after reading this document, the illustrated embodiments and their various alternatives can be implemented without confinement to the illustrated examples. These illustrations and their accompanying description should not be construed as mandating a particular architecture or configuration.

## Claims

1. A fuel component, comprising:
one or more C₄+ compounds derived from biomass conversion using ramps of temperature under pressure,
wherein the fuel component has a component initial boiling point of in the range of 0°C and 70°C and a component final boiling point in the range of 85°C and 225°C, a component density at 20°C in the range of 600 to 990 kg/m³, a component sulfur content of at most 10 mg/kg, a component RON in the range of 80 to 120 and a component MON in the range of 75 to 110.

2. A fuel component, comprising:
one or more C₄+ compounds derived from biomass conversion using ramps of temperature under pressure, wherein the fuel component has a component final boiling point in the range of 110°C to 250°C, a component density at 20°C in the range of 600 to 990 kg/m³, a component sulfur content of at most 10 mg/kg, and a flash point greater than 30°C.

3. A fuel component, comprising:
one or more C₄+ compounds derived from biomass conversion using ramps of temperature under pressure, wherein the fuel component has a T95 in the range of 130°C to 400°C, a density at 20°C is between 600 to 990 kg/m³ and a sulfur content is at most 10 mg/kg.

4. A fuel component, comprising:
one or more C₄+ compounds derived from biomass conversion using ramps of temperature under pressure, wherein the fuel component has an initial boiling point in the range of 80°C to 220°C, a final boiling point in the range of 220°C to 320°C, and a sulfur content of at most 10 mg/kg.

5. A fuel component according to any of claims 1 to 3, wherein one or more of the C₄+ compounds comprise primarily compounds having 4 to 16 carbon atoms; or a fuel component according to claim 4, wherein one or more of the C₄+ compounds comprise primarily compounds having 4 to 9 carbon atoms.

6. A fuel component according to claim 1, wherein the benzene content is less than 3%, and/or wherein the durene content is less than 3%.

7. A gasoline composition comprising: a fuel component according to claim 1, wherein the gasoline composition has an initial boiling point in the range of 0°C and 70°C, a final boiling point at most 225°C, a RON number in the range of 80 to 120 and a MON number in the range of 75 to 110.

8. A gasoline composition according to claim 7, wherein the amount of fuel component in a gasoline composition is at least 0.1 % volume, based on total volume of gasoline.

9. An aviation fuel composition, comprising:
a fuel component according to claim 2, wherein the aviation fuel composition has a final boiling point of at most 250°C, a Lean Mixture MON number of 75 or more, and a Rich Mixture Octane number of 85 or more.

10. An aviation fuel composition according to claim 9, wherein the amount of component in an aviation fuel composition is at least 0.1 % volume, based on total volume of aviation fuel.

11. A diesel composition, comprising:
a fuel component according to claim 3, wherein the diesel composition has an initial boiling point in the range of 130°C to 230°C, a final boiling point of at most 420°C, and a cetane number in the range of 35 to 120.

12. A diesel composition according to claim 11, wherein the amount of fuel component is at least 0.1 % volume, based on total volume of diesel.

13. A kerosene composition, comprising:
a fuel component according to claim 4, wherein the kerosene composition has an initial boiling point of at least 80°C, a final boiling point of at most 320°C, and a flash point is in the range of 35°C to 65°C.

14. A kerosene composition according to claim 13, wherein the amount of fuel component of the present invention in a kerosene composition is at least 0.1 % volume, based on total volume of kerosene.

15. A gasoline composition according to claim 7, or an aviation fuel composition according to claim 9, or a diesel composition according to claim 11, or a kerosene composition according to claim 13, wherein one or more the C₄+ compounds comprise primarily compounds having 4 to 16 carbon atoms.

16. A fuel component, comprising: a combination of at least one of: fuel component of claim 1, fuel component of claim 2, fuel component of claim 3, and fuel component of claim 4.
